# EUROPEAN PATENT APPLICATION

(11) **EP 2 662 564 A1**
(43) Date of publication of application: **13.11.2013**
(21) Application number: 12167216.6
(22) Date of filing: 09.05.2012
(51) Int. Cl.: F04B 1/04, F04B 9/04, F04B 53/00, F04B 53/18, F02M 59/10, F02M 63/00

(54) **Driveshaft lubrication**

(71) Applicant: Delphi Technologies Holding S.à.r.l., 4940 Bascharage (LU)
(72) Inventor: Navas Sanchez, Borja, Chatham, Kent ME4 4DL (GB); Jay, Mikko, Canterbury, Kent CT1 1NZ (GB); West, Benjamin, Whitstable, Kent CT5 2QR (GB); Jury, Thomas, London, SE9 3HL (GB)
(74) Representative: Neill, Andrew Peter

(57) **Abstract**

An apparatus and method are disclosed for transmitting drive between a first and at least one further component. The apparatus includes an elongate shaft element extending along a respective longitudinal axis and comprising a first and further shaft region, each of which comprises a substantially cylindrical outer surface extending from a respective first and further side of a cam body region. The apparatus also includes a fluid communication pathway extending within the shaft element from a first end region of the shaft element to at least one outlet aperture in an outer surface of the first cylindrical region.

## Description

The present invention relates to a method and apparatus for transmitting drive between a first and further component. In particular, but not exclusively, the present invention relates to a driveshaft used in a radial piston pump suitable for high-pressure fuel supply in a fuel injection system. The driveshaft has a fluid communication pathway extending within it which enables lubricant to be transferred from a fluid reservoir in a surrounding housing to an interface region between the driveshaft and the housing.

Various situations are known in which a driveshaft is used to transmit drive from a first energised component to a further component. Under such circumstances, it is known that it is helpful to lubricate one or more interface regions between the driveshaft and a surrounding housing as the driveshaft rotates. One such scenario is in a radial piston pump. Such a pump is suitable for the high-pressure fuel supply often required in fuel injection systems and particularly in a common rail injection system which has a plurality of pump elements disposed radially about a driveshaft. An end of the driveshaft is driven and a cam on the driveshaft is used to sequentially drive the pump element components which, together with the driveshaft, are housed in a pump housing.

In the past, internal drills and galleries have had to be machined in the housing so that lubricant can flow from an inlet supply or other such fluid reservoir/source to regions between the rotating driveshaft and the housing. This has increased complexity and cost associated with the manufacture of the housing and has occasionally led to housing failure. Additionally, a substantial clearance has been required between an outer surface of the driveshaft and an inner surface of the housing at journal bearing seat regions to enable lubricant fluid to flow sufficiently from an input end to an output end. This needed clearance has led to vibration and stress being developed between the journals and driveshaft.

Additionally, as emissions legislation becomes more demanding, weight and inertial reduction becomes desirable in many manufacturing situations. Prior known production driveshafts are typically made from solid metal which represents a substantial amount of mass on a pump. This creates well known problems, such as cost and complexity.

Additionally, prior known driveshafts have a coupling interface which should be forged or machined from solid material specific to a particular need. Manufacturing driveshafts with such couplings under specific instruction according to need has proved to be a highly inefficient and costly way to provide driveshafts.

It is an aim of the present invention to at least partly mitigate the above-mentioned problems.

It is an aim of certain embodiments of the present invention to provide apparatus for transmitting drive between a first and further component whereby a fluid communication pathway extends along and within a driveshaft and connects one or more outlet apertures, provided on the driveshaft where lubricant is required, to a lubricant reservoir of a housing in which the driveshaft is located.

It is an aim of certain embodiments of the present invention to provide a radial piston pump for high-pressure fluid supply in which a driveshaft has an internal fluid communication pathway which delivers lubricant fluid to a desired location without the need for recessed pathways or large clearance spaces being provided in a supporting housing.

It is an aim of certain embodiments of the present invention to provide a method of lubricating a region between a driveshaft and a cam box housing of a radial piston pump whereby one or more fluid communication pathways for delivering lubricant fluid at one or more desired locations are provided internally in the driveshaft.

It is an aim of certain embodiments of the present invention to provide a composite driveshaft in which a coupling interface member may selectively be connected to a shaft which either includes an integral cam or to which a further cam element may likewise be connected.

It is an aim of certain embodiments of the present invention to provide a cam box for a pump in which the cam box can be smaller than prior known cam boxes and in which the clearance between the bearing and the driveshaft can be minimised whilst guaranteeing a desired amount of lubrication flow over journals.

It is an aim of certain embodiments of the present invention to provide a common rail fuel injection system including a plurality of pump elements disposed radially about a driveshaft which can be manufactured in a timely and financially efficient manner.

According to a first aspect of the present invention there is provided apparatus for transmitting drive between a first and at least one further component, comprising:
an elongate shaft element extending along a respective longitudinal axis and comprising a first and further shaft region, each comprising a substantially cylindrical outer surface, extending from a respective first and further side of a cam body region; and
a fluid communication pathway extending within the shaft element from a first end region of the shaft element to at least one outlet aperture in outer surface of the first cylindrical region.

Aptly the elongate shaft element is a substantially hollow body, an interior region of the shaft element comprising the fluid communication pathway and said outlet aperture comprising an aperture in the body.

Aptly the shaft element is a hydroformed member and said first and further shaft regions and said cam body region are integrally formed.

Aptly said first and further shaft regions each comprise a respective cylindrical outer surface comprising a respective bearing journal surface.

Aptly the apparatus further comprises a cam rider member secured at an outer surface of said cam body region.

Aptly the first and further shaft regions comprise regions of a hydroformed and integrally formed shaft member and said cam body region comprises a cam element secured to said shaft member.

Aptly the first shaft region of the shaft member has an outer diameter greater than an outer diameter of the further shaft region.

Aptly the shaft member further comprises a third shaft region between the first and further shaft regions, said third shaft region having an outer diameter less than the outer diameter of the first shaft region and greater than the outer diameter of said further shaft region.

Aptly the cam element is secured to the shaft member over the third shaft region of said shaft member.

Aptly the apparatus further comprises a ring member that locates over and is securable to said further shaft region of said shaft member.

Aptly the apparatus further comprises an outer surface of said first shaft region and an outer surface of said ring member each comprises a respective bearing journal surface.

Aptly the elongate shaft element comprises a machined from solid body comprising at least one axially extending passageway portion extending longitudinally within the body from the first end region and a further passageway portion extending radially outwardly from the axially extending passageway portion to the outlet aperture.

Aptly the apparatus further comprises a coupling interface member secured at a remainder end region of the shaft element.

Aptly the coupling interface member comprises a machined from solid element.

According to a second aspect of the present invention there is provided a driveshaft for a high pressure pump comprising the previously described apparatus.

According to a third aspect of the present invention there is provided a radial piston pump for high pressure fluid supply, comprising:
a cam box housing comprising at least one pump aperture and a first and second bearing journal seat region;
at least one pump element disposed in each respective pump aperture; and
an elongate driveshaft comprising a first and further bearing journal surface extending from a respective first and further side of a cam body region, said first and further bearing journal surfaces being disposed in a respective housing seat region; wherein
the driveshaft comprises a fluid communication pathway extending within the shaft element from a first end region thereof to at least one outlet aperture in the first bearing journal surface.

Aptly the elongate driveshaft is a substantially hollow body, an interior region of the driveshaft comprising the fluid communication pathway and said outlet aperture comprising an aperture in the body.

Aptly the elongate driveshaft comprises a machined from solid body comprising at least one axially extending passageway portion extending longitudinally within the body and a further passageway portion extending radially outwardly from the axially extending passageway portion to the outlet aperture.

According to a fourth aspect of the present invention there is provided a method of lubricating a region between a driveshaft and a cam box housing of a radial piston pump, comprising the steps of:
as a driveshaft of a radial piston pump rotates in a housing, delivering lubricant fluid from a reservoir region of the housing to an aperture in a journal bearing region of the driveshaft via a fluid communication pathway extending within the shaft element from a reservoir end of the shaft element to the aperture.

Aptly the method further comprises delivering lubricant fluid, comprising fuel, to said aperture via a driveshaft comprising a substantially hollow body.

Aptly the method further comprises delivering lubricant fluid, comprising fuel, to said aperture via a driveshaft comprising a machined from solid body comprising at least one axially extending passageway portion extending longitudinally within the body from the first reservoir end of the shaft element and a further passageway portion extending radially outwardly from the axially extending passageway portion to the outlet aperture.

Aptly, the shaft element of the apparatus is hydroformed from a material that provides a hardness of about around 500 to 800 Hv.

Aptly, the hardness is about around 650 Hv.

Aptly, when a cam rider member is secured at an outer surface of a cam body the cam rider member provides an outer cam surface having a hardness of about around 700 to 800 Hv.

Aptly, the hardness is about around 750 Hv.

Aptly, each bearing journal surface has a hardness of about around 500 to 800 Hv.

Aptly, the hardness is about around 650 Hv.

Aptly, an outer surface of a cam element of the apparatus has a hardness of about around 700 to 800 Hv.

Aptly, the hardness is about around 750 Hv.

Aptly, a coupling interface member of the apparatus comprises a tapered outer surface region.

Aptly, the coupling interface member of the apparatus is a drive tang.

Aptly, the coupling interface member of the apparatus is machined from solid material having a hardness of about around 500 to 800 Hv.

Aptly, the hardness is about around 650 Hv.

According to a fifth aspect of the present invention, there is provided apparatus for transmitting drive between a first and further component, comprising:
an elongate shaft element extending along a respective longitudinal axis and comprising a first and further substantially cylindrical region extending from a respective first and further side of a cam body region; and
at least one coupling interface member each secured at a respective end of the shaft element.

Certain embodiments of the present invention provide the advantage that a fluid communication pathway for supplying lubricant between a driveshaft and a supporting housing is provided internally within the driveshaft. As a result, lubricant can be delivered through one or more apertures in the driveshaft exactly where it is required. Also, recessed drills and galleries in a surrounding housing are not required which avoids unnecessary manufacturing costs. Also, a clearance between an outer surface of the driveshaft and an inner surface of the housing in which the driveshaft rotates can be much reduced relative to prior known systems. This helps reduce vibration and stress which might otherwise develop during use.

Certain embodiments of the present invention provide a composite driveshaft wherein parts of a driveshaft such as a coupling interface and/or bearing journals and/or cam elements can be manufactured separately on a bulk basis and then a composite driveshaft incorporating selected parts may be put together according to customer specific requirements. The coupling interface, shaft and cam may be independently manufactured and stored. This helps reduce manufacturing and production costs of the final driveshaft and also provides a wider variety of possible material characteristics for an end customer.

Certain embodiments of the present invention provide the advantage that a hollow driveshaft element, of the type that can be manufactured via a hydroformed process, can be used in a pump. Utilising a hollow driveshaft enables a relatively large bore fluid communication path to be made available for lubricant fluid flow which thus internally cools the driveshaft in an optimum way. Using a hollow driveshaft manufactured via a hydroforming process also helps reduce the mass of material utilised to produce the driveshaft which reduces inertial effects and weight associated with the driveshaft as well as material costs.

Embodiments of the present invention will now be described hereinafter, by way of example only, with reference to the accompanying drawings in which:
Figure 1 illustrates parts of a high-pressure pumping system;
Figure 2 illustrates a driveshaft rotatably mounted in a housing;
Figure 3 illustrates a driveshaft;
Figure 4 illustrates a driveshaft;
Figure 5 illustrates other views of the drive shaft shown in Figure 4;
Figure 6 illustrates different types of possible coupling interface; and
Figure 7 illustrates apertures in a driveshaft.

In the drawings like reference numerals refer to like parts.

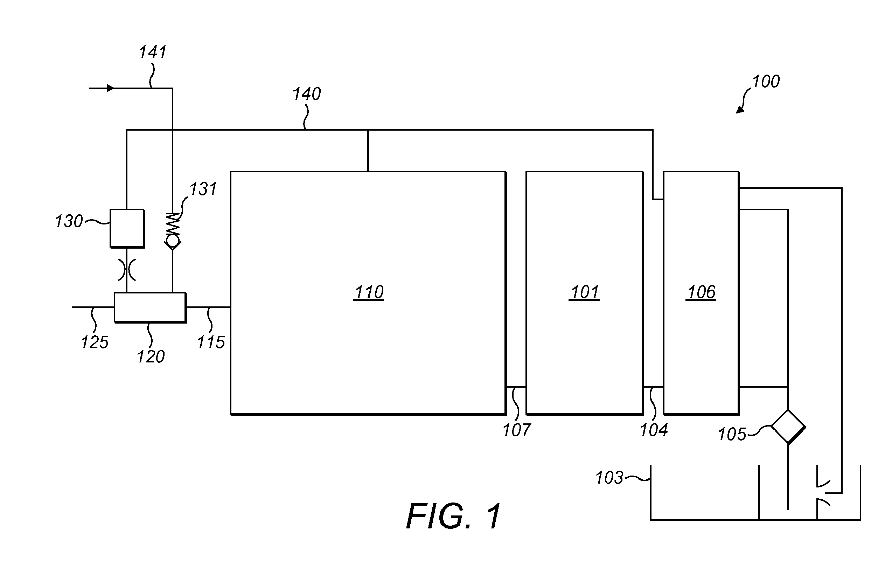

Figure 1 is a schematic view of a common rail injection system 100. A pre-feed pump 101 receives fuel 102 from a tank 103 via an inlet line 104. A first filter such as a pre-filter 105 and further filter (not shown) in a control module 106 may be utilised to clean the fuel prior to provision to the pre-feed pump 101. A compression line 107 from the pre-feed pump 101 supplies a high-pressure fuel pump 110 with fuel. The high-pressure fuel pump 110 is a radial piston pump with three pump elements. It will be appreciated that embodiments of the present invention are not limited to use with a pump or with a high pressure pump of the type used in the system shown in Figure 1. Rather, certain embodiments of the present invention are broadly applicable to the situation in which a driveshaft element is utilised to transfer drive from a first energised source to one or more further component parts and where one or more interface regions between the components and the drive shaft should be lubricated.

Each pump element shown in Figure 1 is used to supply a high-pressure line 115, which itself supplies a common rail 120, which then supplies one or more injector elements via a connection line 125. The pressure in the common rail is regulated via a pressure valve 130. A further over-pressure valve 131 connects the common rail to a return line 140. A leakage line 141 allows fuel to also be returned to the tank 103.

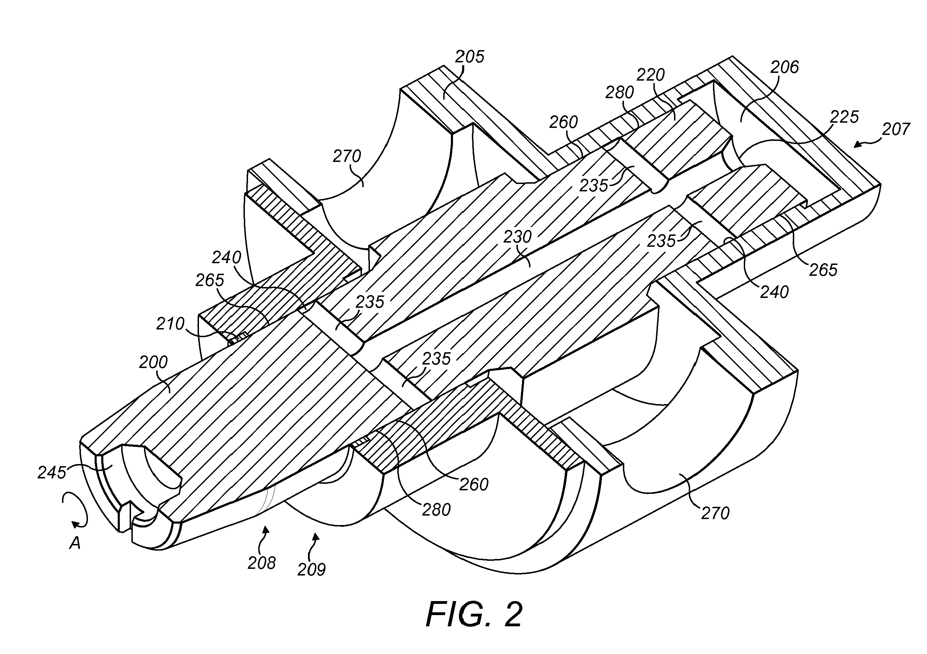

Figure 2 illustrates a cut-through view of the high pressure pump 110 in more detail. An elongate shaft 200 extends along a respective longitudinal axis and rotates there around in a clockwise (or anti clockwise) direction indicated by arrow A. The shaft is supported in a surrounding housing 205 which has a fluid storage chamber 206 at one end 207 and an open mouth 208 at a further end 209. A seal 210 extends around the open mouth and provides a fluid tight seal between the outer surface of the shaft and the housing body.

The shaft has a first end 220 that is proximate to the fluid storage chamber and has at least one opening 225 in the shaft end that is in fluid communication with the fluid in the chamber. As illustrated in Figure 2 a single centrally located aperture provides an open mouth for fluid in the chamber to flow into. This opening 225 is connected via an axially extending bore 230 made in the solid material of the shaft and radially extending side passages 235 to further openings 240 at the outer surface of the shaft. The opening 225 at the end 220 of the shaft that is enclosed in the housing body is thus connected via a fluid communication pathway made up of the bore 230 and side passage 235 to the outlet 240. Although four outlets are shown in Figure 2 it will be appreciated that one, two or more outlet openings may be provided at suitable locations and connected to the central bore via respective radial side passages. Other shapes, sizes and orientations of passageway could of course be utilised.

The shaft 200 is a manufactured from solid piece and includes a coupling 245 at the further end 209 of the shaft remote from the end 220 that is enclosed in the housing. The shaft also includes a cam region that rotates as the shaft is driven at the coupling end. The housing body includes pump orifices (two shown) that each house a respective high pressure pump (partially shown). As the drive shaft is driven it rotates and is supported in the housing at its cylindrical journal bearing regions 260 in respective seats 265. Each journal bearing region extends on either side of the cam. The cam rotates as the shaft rotates and sequentially compresses the tappets and springs (not shown) of the pumps in the pump orifices 270 in the housing 205. This duly energises a pump chamber in each pump and raises the pressure of fuel which is introduced into the pump chambers at appropriate times for later use.

The fluid from the fluid storage chamber acts as a lubricant to lubricate the interface regions 280 between the rotating shaft and the fixed housing. The fluid can be any type of lubricant but is typically engine fuel or the like. The lubrication cools and/or lowers friction and/or removes debris and/or prevents fretting between opposed moving surfaces.

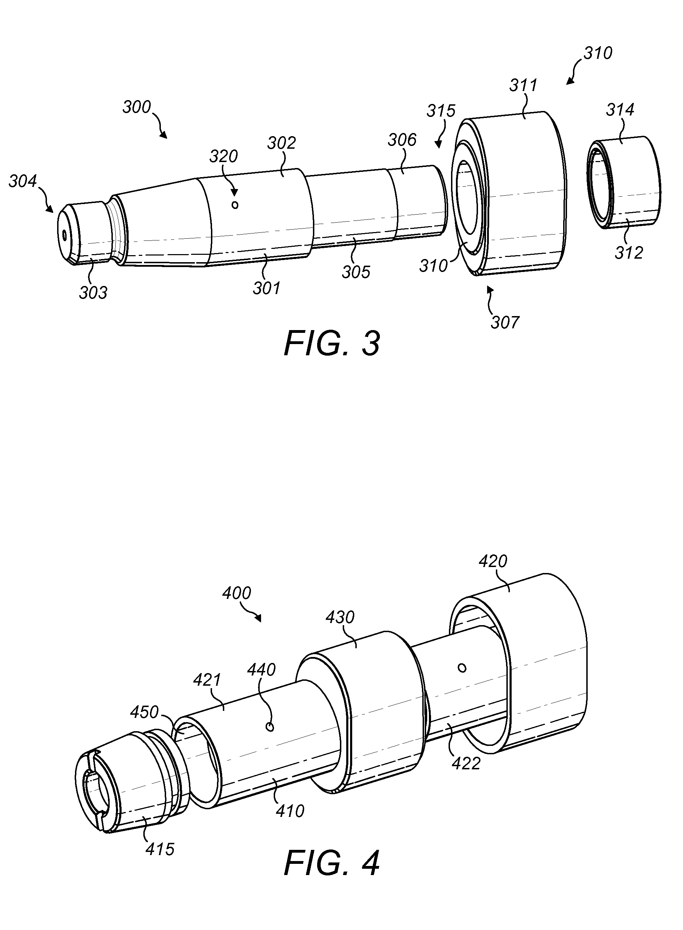

The shaft shown in Figure 2 is an integrally formed piece including a main shaft, coupling and cam. Fluid passageways are drilled or moulded or forged depending upon a manufacturing process used to create the shaft. Figure 3 illustrates an alternative embodiment in which a composite shaft 300 is provided by a main shaft piece 301 which includes a first journal bearing region 302 that provides a cylindrical outer surface which extends into a coupling 303 at an end 304 of the shaft. The shaft piece extends from the first journal region into a stepped in cylindrical region which has an outer circumference of less radius than the first journal region. The shaft extends from this stepped in region to a still further stepped in region 306 again with less radius at a remaining end 307 of the shaft.

A separately formed cam 310 is provided by a cam body 311 and outer cam lobe 312. The cam 310 is secured onto the outer surface of the stepped in region 305. A ring 312 is then located over the end stepped in region 306 to help ensure that the cam 310 does not become detached from the shaft. The outer surface 314 of the ring provides the further journal bearing region to the shaft so that one is provided on either side of the cam to duly support the shaft in a housing in use. Although not shown in Figure 3 fluid communication passageways similar to those shown in Figure 2 are provided in the shaft shown in Figure 3 leading from an aperture in the end 315 of the shaft to at least one aperture 320 in the journal bearing regions of the shaft. It will be appreciated that when a ring 312 is utilised this must have an opening that aligns at least in some way with a corresponding opening in the driveshaft to feed lubricating fluid to an interface region. Alternatively, lubricant to the interface region provided by the ring can be provided via other conventional methods. The shaft shown in Figure 3 is thus a composite driveshaft in which the cam is separate from the coupling and parts of the shaft itself. The materials used for the production of each piece can thus be tailored to particular customer parameter requirements such as hardness, temperature resistance and weight or the like. Having a lubricating passageway extending within the driveshaft means lubricant can be delivered where it is needed without having to provide substantial clearance between the housing and the shaft and/or gulleys or passages in the housing in which the shaft is supported.

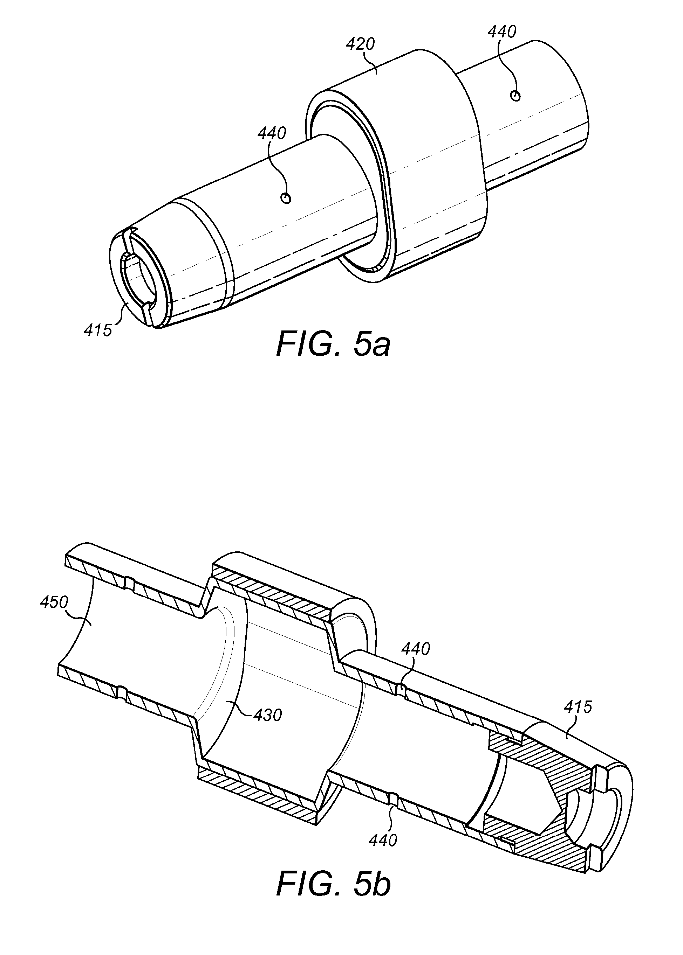

Figure 4 illustrates an alternative composite driveshaft 400. This is provided by a hollow shaft body 410 to which is secured a coupling connector 415. The connector is a made from solid piece. A cam lobe 420 which is manufactured from a material that will provide the necessary hardness for the cam as it is worked against opposed pump elements is also secured to the hollow shaft body. A first substantially cylindrical surface 421 and a second substantially cylindrical surface 422 are provided on either side of and integrally formed with the cam body 430 to which the cam lobe is secured. Two diametrically opposed through holes 440 are made through the hollow body of the shaft in the first and second journal regions (other openings could of course be provided wherever lubricant is needed in use). The through holes fluidically connect the central bore 450 of the shaft to an outer surface 421 of the shaft. Figures 5a and 5b help illustrate the hollow nature of certain parts of the shaft body and how other parts are secured thereto.

The hollow shaft body may be made in a variety of ways. For example the body may be hydroformed. The cam lobe is machined either from solid or from a forged piece of steel or the like. A shaft template is likewise obtained either from a rolled-welded bar of steel or machined from solid piece. Materials and hardness's etc. are selected according to application to tailor performance according to need. The cam is then placed on the shaft inside a moulding with a hole being provided in each end of the shaft piece. Once constrained pressure is applied over the two parts and high pressure water is injected through the two holes of the moulding. The increase in pressure from the inside of the shaft makes it deform and match the shape and configuration of the moulding in which it is secured. Simultaneously the cam lobe is constrained. At the end of the manufacturing phase a customer interface is attached to the end of the shaft by laser welding, press fitting or broaching or the like. Optional production steps like grinding, coating or the like may then be carried out. For a press fit composite shaft option the cam is machined from solid and fixed onto the shaft by interference fit. After this optional heat treatment, final grinding and/or coating steps may be carried out.

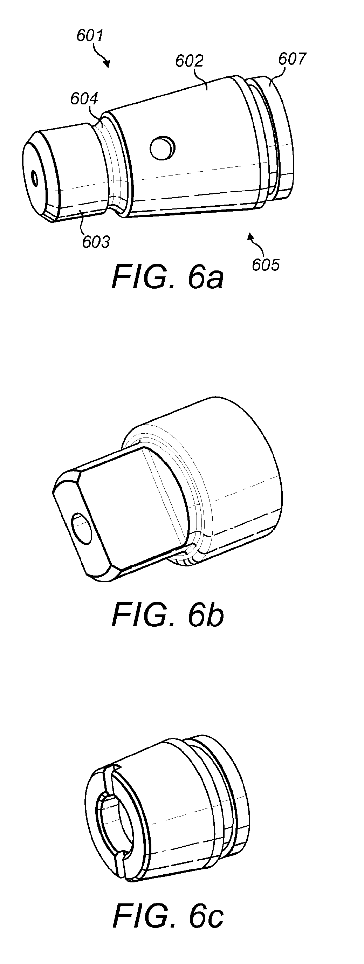

Figure 6 illustrates three options (others are of course available) for the coupling interface that is provided at an end of the driveshaft. This is used to connect to a drive source that then drives the drive shaft to thereafter drive further components such as the pump tappets as the cam rotates. The coupling may be integrally formed with a "solid" driveshaft or, as shown in Figure 6 may be a separate piece that is thereafter duly secured to a shaft as part of a composite driveshaft. Figure 6a illustrates a drive interface that is a coupling body 601 that has a generally tapered outer surface 602 that narrows towards a first end where a substantially cylindrical surface 603 is provided. The cylindrical and tapered surfaces are separated by a circumferentially extending gully 604. A remaining end region 605 of the coupling body includes a securing ring 607. Figure 6b illustrates a drive tang type coupling and Figure 6c illustrates another possible type of tapered coupling.

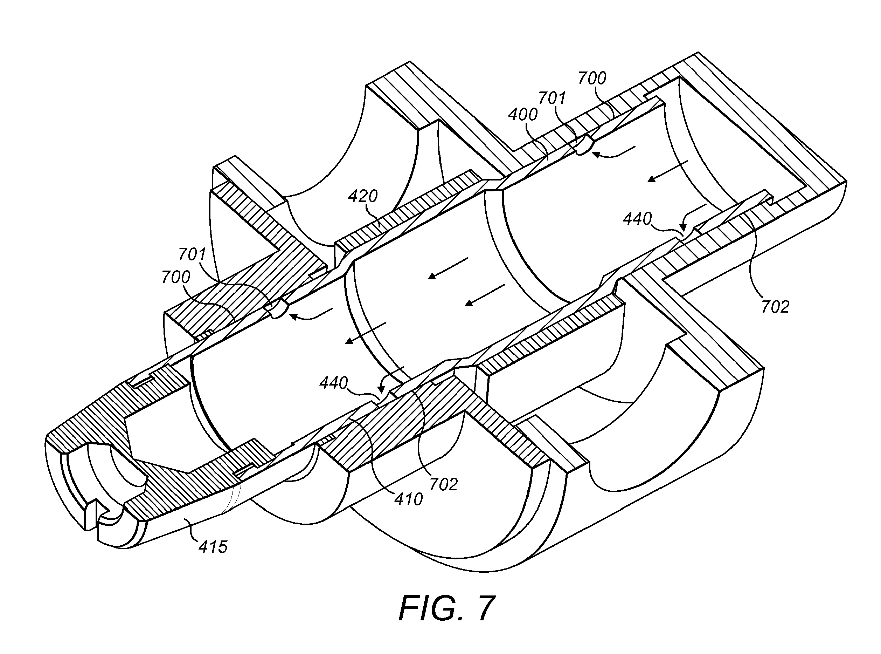

Figure 7 helps illustrate how the composite driveshaft 400 shown in Figures 4 and 5 delivers lubricant to an interface region 700 between the rotating shaft and opposed surfaces 701 of the fixed housing. Figure 7 illustrates with arrows the flow of lubricant from a store of lubricant (provided by a chamber in the housing) at one end of the shaft along a central bore and via through holes 440 into the interface region. Because the shaft is a hollow body the bore along which fluid can flow has a substantial cross section. This allows a sizeable body of fluid to be held in the bore at any one time thus helping the overall cooling process. Also a good flow rate down the shaft and out of the through holes can be maintained. This helps cooling and preventing the build-up of debris during use. Because fluid can be delivered exactly where needed (by designing the holes to be located accordingly) an optimum lubricating effect can be achieved. Also because lubricating fluid is deliverable anywhere the clearance 702 between an outer surface of the shaft and an inner surface of the housing can be kept to a minimum distance during a design process. The bearing journals are thus lubricated through a forced flow from a pumps cam box to both extremes of the pump. The fluid can then be collected and driven back to the cam box or back leak outlet. By having a composite driveshaft with inner cooling, flow can be delivered without complex manufacturing steps being needed. Lubricant does not need to be delivered from one side to another through a bearing's clearance as has previously been needed with prior art techniques.

Certain embodiments of the present invention thus provide a composite driveshaft which is formed by assembling multiple component parts. For example, a coupling interface, shaft and cam part may be secured together. Specific materials, such as hard materials, can thus be provided for contact areas, whilst other materials can be used in other parts. Aptly, the materials used are metals such as steel or the like etc., however other plastic type components such as Epoxy, GRP or the like etc. could also be utilised. Component parts may be manufactured separately and thereafter stored. Subsequent to receipt of a customer request a driveshaft having desirable characteristics can be assembled by selecting the component parts accordingly. This enables each part to be customer specific.

Use of a composite driveshaft also means that a substantially hollow shaft can be utilised whilst retaining machined from solid parts in certain regions of the driveshaft. Using a hollow driveshaft or a driveshaft with one or many fluid delivery passageways passing there through, helps optimise lubrication and cooling on bearings and the cam box.

Certain embodiments of the present invention provide a composite driveshaft which is hydroformed. The driveshaft coupling interface is machined from solid according to customer specification and then joined to an end of the shaft. This solution helps reduce weight, carbon dioxide footprint and material costs. Also, because the finished composite component is lighter than prior known driveshafts, the inertia is smaller which makes a highly desirable high-pressure pump.

Throughout the description and claims of this specification, the words "comprise" and "contain" and variations of them mean "including but not limited to" and they are not intended to (and do not) exclude other moieties, additives, components, integers or steps. Throughout the description and claims of this specification, the singular encompasses the plural unless the context otherwise requires. In particular, where the indefinite article is used, the specification is to be understood as contemplating plurality as well as singularity, unless the context requires otherwise.

Features, integers, characteristics or groups described in conjunction with a particular aspect, embodiment or example of the invention are to be understood to be applicable to any other aspect, embodiment or example described herein unless incompatible therewith. All of the features disclosed in this specification (including any accompanying claims, abstract and drawings), and/or all of the steps of any method or process so disclosed, may be combined in any combination, except combinations where at least some of the features and/or steps are mutually exclusive. The invention is not restricted to any details of any foregoing embodiments. The invention extends to any novel one, or novel combination, of the features disclosed in this specification (including any accompanying claims, abstract and drawings), or to any novel one, or any novel combination, of the steps of any method or process so disclosed.

The reader's attention is directed to all papers and documents which are filed concurrently with or previous to this specification in connection with this application and which are open to public inspection with this specification, and the contents of all such papers and documents are incorporated herein by reference.

## Claims

1. Apparatus for transmitting drive between a first and at least one further component, comprising:
an elongate shaft element extending along a respective longitudinal axis and comprising a first and further shaft region, each comprising a substantially cylindrical outer surface, extending from a respective first and further side of a cam body region; and
a fluid communication pathway extending within the shaft element from a first end region of the shaft element to at least one outlet aperture in an outer surface of the first cylindrical region.

2. The apparatus as claimed in claim 1, further comprising:
the elongate shaft element is a substantially hollow body, an interior region of the shaft element comprising the fluid communication pathway and said outlet aperture comprising an aperture in the body.

3. The apparatus as claimed in claim 1 or claim 2, further comprising:
the shaft element is a hydroformed member and said first and further shaft regions and said cam body region are integrally formed.

4. The apparatus as claimed in any preceding claim, further comprising:
said first and further shaft regions each comprise a respective cylindrical outer surface comprising a respective bearing journal surface.

5. The apparatus as claimed in claim 1 or claim 2, further comprising:
the first and further shaft regions comprise regions of a hydroformed and integrally formed shaft member and said cam body region comprises a cam element secured to said shaft member.

6. The apparatus as claimed in claim 1, further comprising:
the elongate shaft element comprises a machined from solid body comprising at least one axially extending passageway portion extending longitudinally within the body from the first end region and a further passageway portion extending radially outwardly from the axially extending passageway portion to the outlet aperture.

7. The apparatus as claimed in any preceding claim, further comprising:
a coupling interface member secured at a remainder end region of the shaft element.

8. The apparatus as claimed in claim 7, wherein the coupling interface member comprises a machined from solid element.

9. A driveshaft for a high pressure pump comprising the apparatus as claimed in any preceding claim.

10. A radial piston pump for high pressure fluid supply, comprising:
a cam box housing comprising at least one pump aperture and a first and second bearing journal seat region;
at least one pump element disposed in each respective pump aperture; and
an elongate driveshaft comprising a first and further bearing journal surface extending from a respective first and further side of a cam body region, said first and further bearing journal surfaces being disposed in a respective housing seat region; wherein
the driveshaft comprises a fluid communication pathway extending within the shaft element from a first end region thereof to at least one outlet aperture in the first bearing journal surface.

11. The radial piston pump as claimed in claim 10, further comprising:
the elongate driveshaft is a substantially hollow body, an interior region of the driveshaft comprising the fluid communication pathway and said outlet aperture comprising an aperture in the body.

12. The radial piston pump as claimed in claim 10, further comprising:
the elongate driveshaft comprises a machined from solid body comprising at least one axially extending passageway portion extending longitudinally within the body and a further passageway portion extending radially outwardly from the axially extending passageway portion to the outlet aperture.

13. A method of lubricating a region between a driveshaft and a cam box housing of a radial piston pump, comprising the steps of:
as a driveshaft of a radial piston pump rotates in a housing, delivering lubricant fluid from a reservoir region of the housing to an aperture in a journal bearing region of the driveshaft via a fluid communication pathway extending within the shaft element from a reservoir end of the shaft element to the aperture.

14. The method as claimed in claim 13, further comprising the steps of:
delivering lubricant fluid, comprising fuel, to said aperture via a driveshaft comprising a substantially hollow body.

15. The method as claimed in claim 13, further comprising the steps of:
delivering lubricant fluid, comprising fuel, to said aperture via a driveshaft comprising a machined from solid body comprising at least one axially extending passageway portion extending longitudinally within the body from the first reservoir end of the shaft element and a further passageway portion extending radially outwardly from the axially extending passageway portion to the outlet aperture.
